# EUROPEAN PATENT SPECIFICATION

(11) **EP 1 568 747 B1**
(45) Date of publication and mention of the grant of the patent: **19.12.2007**
(21) Application number: 04075588.6
(22) Date of filing: 26.02.2004
(51) Int. Cl.: C09J 5/00, E04F 13/14, E04F 15/02

(54) **Adhesion of reinforcing meshes or rigid sheets to the back of ceramic tiles, natural stone and mosaic composition of any nature used in building by an adhesive cured with ultraviolet lamps.**
Verkleben von Bewehrungsmatten oder steifen Flachmaterialen an Rückseiten von Keramikfliesen, Steinplatten und Mosaikzusammensetzungen mit einem UV gehärteten Klebstoff
Adhésion de grillages d'armatures ou feuilles rigides à l'arrière de carreaux de céramique, de pierre naturelle et de composition mosaique avec un adhésif réticulé avec des lampes à ultraviolets

(43) Date of publication of application: 31.08.2005
(73) Proprietor: Uvix SLL, 12006 Castellon (ES)
(72) Inventor: Gil Valls, Juan, Castellon (ES)
(74) Representative: Naranjo Marcos, Maria Antonia

(56) References cited:
- GB-A- 950 336
- DATABASE WPI Section Ch, Week 200144 Derwent Publications Ltd., London, GB; Class A18, AN 2001-415864 XP002289580 & JP 2001 140449 A (HEKINAN TOKUSHU KIKAI KK) 22 May 2001 (2001-05-22)
- DATABASE WPI Section Ch, Week 199808 Derwent Publications Ltd., London, GB; Class A18, AN 1998-081475 XP002289581 & JP 09 314751 A (BRIDGESTONE CORP) 9 December 1997 (1997-12-09)

## Description

The present invention refers to an industrial method for adhesion of reinforcing meshes, nets, rigid or semi-rigid sheets to the rear face of tiles destined to building, in order to obtain an optimum design, adequate joining, facilitate their laying and improve their characteristics or technical properties.

The invention is applicable to all types of materials used in the building sector, cut in small pieces or fragments for making mosaics of different colours, compositions, decorations and mixing materials of different nature. It is also applicable to all types of natural or prefabricated materials in the building for floors, walls, coating and ceilings.

In building sector, tiles used as finishing materials are designed to meet all demands, not only those adapted to the appropriate use of the product, but also to aesthetic and technical requirements and fashions. In contemporary architecture, straight lines are especially interesting, as well as warm and bright materials, industrial processes providing us with natural-looking prefabricated material of superior technical features and homogeneity in shapes and colours.

General state of prior art is shown in patents such as GB 950,336 which features particularly a special cement composition used particularly to fix crystal sheets together or to rigid plastic or ceramic sheet, being always transparent sheets . This invention refers to the use of ultraviolet lamps as an alternative step of the polymerization process , this invention specifies that the feature is the use of ultraviolet lamps in a cement of the like described in claims one to ten with the particularity that the cement catalyzator is benzoin.

The particular feature of the patent is not the afixiation procedure that is specified as exposition to ultra violet light as a particular source or light or heat but the particular protected feature is the chemical composition of the fixing cement shown in claims 1 to 10 allowing different crytal surfaces to fix or crystal with hard plastics transparent sheets.

In the present invention the adhesive element is applied as a structural reinforcing element within constructive uses applied to reinforcing meshes or nets.

Japanese Patent 2001140449 discloses a method for coupling tiles in outer/ side walls by means of a coupling agent provided with electron beam curing resins, the tiles are coupled one to another withour of any reinforcing mesh or net, the adhesive is placed always in the side part of the tile, making a linking function which is not performed by the present invention in which the couplig agent is applied to fix the mosaics to reinforcing meshes or sheets making a single piece of a plurality of mosaics and always to the back face but to the side of the tiles/ mosaics, also in JP 2001140449 the ultraviolet radation exposition is aplied to both sides of the tile, while in the present invention its applied only to the rear face. In the present invention the adhesion is by using an ultraviolet adhesive formulated with photo-initiators and putting through a tunnels of low or high power ultraviolet lamps of a pre-calculated wavelength.

The process of the present invention allows mosaic compositions to be produced in an industrialised way, no matter which type of material is used. It also permits incorporation of technological solutions that contribute to a higher consumption of tiles, optimizing their aesthetics, increasing their fields of application, facilitating their laying and improving their final resistance.

Main advantages of the present invention are now:
- Improvement in the design and joining.
- Later overall installation is made easier.
- Improvement of the technical properties, fixing of the finishing tiles.
- Allows adding reinforcements that prevent parts from coming off due to impacts.
- Compositions in the form of mosaics may be carried out in an industrialised way.
- This procedure does not vary the order of the assembly chain, but improves its philosophy.
- It speeds up the industrial process by reducing the physical space required and improving its effectiveness.
- Prefabricated sheets can be put onto to the back of the tile so that it may be laid dry.

The invention is defined by the claims.

Application of the invention to the industrial production of mosaic compositions.

Prior art procedures consists of carrying out a composition with denned types, forms and colours. Then a standard-size mould is made of flexible or rigid material, the holes prepared in the mould are filled with the pieces / fragments cut to size, the pieces of the mosaic are generally placed the other way round and then it is turned round manually in the production line, although there are also machines which do this automatically. Immediately afterwards, the composition or mosaic is placed on the mould with a mesh or net with criss-cross threads, adhered with a water-based vinyl or acrylic adhesive with the help of a mechanical application head that transfers the adhesive. When materials with a low water absorption are used, sandstone, glass, metals, the drying time of the adhesive is noticeably prolonged. In order to accelerate the industrial procedure, following the meshing process, electric resistance or hot air dryers are used which help and speed up the drying process of the composition or mosaic. This drying process takes several minutes. During that period the composition must not be manipulated since the adhesive still has not reached the strength required. The chemical characteristic of a water-based adhesive is that it hardens on contact with air. If we do not have capillary absorption in the chosen tiles, excessive environmental humidity, and low temperatures, we cannot control their setting speed. The opposite can also occur, as during the summer months the heat or the high temperatures of the dryer lead to the rapid evaporation of the adhesive water content, causing it to dry, and, consequently rendering it inefficient. Too many non-controllable factors to take into account in an industrialised process.

Complementary to the above-mentioned description, the process is carried out in the production line, assembly of the mosaic, adhesion of the mesh or net, pressing with rollers to facilitate complete adhesion of the mesh to the tiles, drying of the mosaic, its demoulding and insertion.

The application of the present invention does not change the order of the assembly chain, but it does alter its entire philosophy, the water-based adhesive being replaced by an ultraviolet cured adhesive made with photo-initiators. The hot air or resistance drying tunnel is also replaced by a tunnel with low-power and / or high-power ultraviolet lamps of a suitable wavelength. This change allows for a considerable reduction in the length of the hot air dryer.

The curing of the adhesive is done by photo-initiation, that is, in contact with the light of the UV light tunnel, the photo-initiators are immediately activated, hardening and drying the adhesive.

The great versatility of this system is its speed in the industrial process, reduction in physical space and its effectiveness for its chemical adhesion. Environmental conditions do not affect the correct adhesion, thus drastically improving productivity of the line.

Application of the invention to rigid or semi-rigid sheets of prefabricated material to add as reinforcement to all types of natural or prefabricated tiles used as finishes in the building sector. Drying by adhesive with photo-initiators.

It allows several sorts of application depending on whether the system is of reinforcement or fixing.

### a) System of Reinforcement

This system offers the possibility to incorporate an industrialised type of reinforcement to natural and prefabricated materials used for tiling, increasing their technical qualities.

Incorporation of flexible or semi-rigid meshes on the back of the tiles, covering practically the full surface, means that the tiles can be placed on ventilated façades, that is, on aluminium and steel profile structures. The use of tiles on ventilated facades is becoming more and more frequent, due to their low water absorption and efficient performance regarding environmental agents. Once installed on the supporting structure, they are then held in place with cramp irons or brackets screwed mechanically onto the aluminium sub-structure. If something were to hit the tiles, pieces could break off due to their fragility. In order to make them extra-secure, a flexible or semi-rigid mesh is placed on the back of the tile, adhered with an epoxy or polyurethane adhesive which, in the event of impact, will hold the fragments of the damaged surface together, preventing any fragments from falling off and posing a hazard to passers-by.

With the system described, the present invention means that, in the industrial process, it is possible to carry out adhesion of prefabricated sheets or meshes using a top-quality adhesive that has been cured in a tunnel of ultraviolet lamps. Adhesive can be applied to the back of the tile in different ways: with an application head that coats the mesh or reinforcing sheet with adhesive, by spraying with a gun and in the form of a curtain, during this last process, a closed circuit is created in which the adhesive flows through a fixed application head that, through gravity, releases the adhesive in the form of a curtain impregnating the tiles that pass below.

Once adhesive has been applied, either to the tile, or to the tile and the mesh or sheet, or the mesh or sheet, its curing is immediately carried out in the tunnel of ultraviolet lamps. The adhesive formulated with photo-initiators hardens instantly, thus facilitating its manipulation, insertion and trowelling. Not only do we acchieve speed and viability in the system of production, but at the same time we protect the tile by reinforcing it and reducing the risk of pieces flying off in the event of impact.

### b) Fixing system

The tiles to be used, made of natural or prefabricated materials, are employed as finishing material in the building sector. Their laying has to be carried out in practically a traditional way, with the corresponding disadvantages that this entails, as the labourer has to lay the tiles one by one, using different kinds of adhesive materials, although they are generally cementitious glue mortars. This process requires skilled workers for laying the tiles, the tiler's experience affecting the final aesthetic result.

The present invention offers, by means of an industrialised process, possibility of joining prefabricated rigid or semi-rigid sheets to the back of tiles using an adhesive with photo-initiators. The aim of this system is their dry installation; that is, with a rapid assembly system or puzzle-type joints.

It is not intended to go deeply into the characteristics of the assembly method, but into the productive process of industrial production, in which, by using an adhesive with the characteristics according to the strength required and dried by photo-initiators, an automated industrial process can be carried out.

Once adhesive has been applied to the tile, either to the prefabricated sheet or with a mixed method of application on both parts, an automatic system of alignment and pressure is incorporated, to facilitate its correct positioning on the tile. The curing of the adhesive is done immediately in the tunnel of ultraviolet lamps. The adhesive formulated with photo-initiators hardens instantly, thus facilitating its dry manipulation, insertion and trowelling, without works. Not only do we achieve speed and viability in the production system, but at the same time we improve tile strength in the event of impact and have a system that facilitates the laying of the tiles.

Types of adhesive with photo-initiators to be used in this industrial process can be:
A / Polyurethane resins with photo-initiators, their characteristic being that they offer great stability in their adhesion to the mesh backing, resisting damp and demanding work conditions.
   Thermoset resins can also be included. These are those that have been cured at room temperature, that is, first the photo-initiation acts and then the thermoset resin optimises the system of adhesion..
B / Epoxy resins with photo-initiators, their characteristic being that they offer a high level of product adhesion to materials that are not very absorbent.
   Thermoset resins can also be included, those that have been cured at room temperature, that is, first the photo-initiation acts and then the thermoset resin optimises the system of adhesion.
C / Water-based resins with photo-initiators, their characteristic being that they offer little technical strength and a lower quality adhesion; in the industrial process a dryer would have to be incorporated between the mesh application head and the UV light tunnel, in order to previously eliminate the water from the adhesive.
   Thermoset resins can also be included. These are those that have been cured at room temperature, that is, first the photo-initiation acts and then the thermoset resin optimises the system of adhesion.
D / Polyester resin with photo-initiators, its characteristic being that it offers a good level of adhesion, sufficient for the provisional binding of the mosaic until its definitive laying on site.
   Thermoset resins can also be included. These are those that have been cured at room temperature, that is, first the photo-initiation acts and then the thermoset resin optimises the system of adhesion.
E / Mixed or hybrid systems in which different types of resins can be blended with photo-initiators.

Technical characteristics of the adhesive can be developed and formulated in accordance with the needs of the productive process and requirements of its final use. Some examples are: adhesion, viscosity, thixotropy, final strength, flexibility, moistening capacity and thickness.

## Claims

1. Method for adhesion of reinforcing meshes or rigid sheets to the back of ceramic tiles, natural stone and mosaic composition used in building sector, **characterised by** using an ultraviolet adhesive formulated with photo-initiators applied to the tiles and the fixing meshes which are put through a tunnel of low/ high -power ultraviolet lamps of a pre-calculated wavelength, and photo-initiators to harden and dry the adhesive.

2. Method for adhesion of reinforcing meshes or rigid sheets to the back of ceramic tiles, natural stone and mosaic composition used in building sector, according to claim 1, **characterised by** placing tiles on ventilated façades.

3. Method for adhesion of reinforcing meshes or rigid sheets to the back of ceramic tiles, natural stone and mosaic composition used in building sector, according to claims 1 and 2, **characterised by** applying the adhesive to the reinforcing sheet or mesh by means of an application head.

4. Method for adhesion of reinforcing meshes or rigid sheets to the back of ceramic tiles, natural stone and mosaic composition used in building sector, according to claims 1 and 2 **characterised by** applying the adhesive to the reinforcing sheet or mesh by spraying with a gun.

5. Method for adhesion of reinforcing meshes or rigid sheets to the back of ceramic tiles, natural stone and mosaic composition used in building sector, according to claims 1 and 2 **characterised by** applying the adhesive to the reinforcing sheet or mesh in the form of a curtain.

6. Method for adhesion of reinforcing meshes or rigid sheets to the back of ceramic tiles, natural stone and mosaic composition used in building sector, according to claims 1 to 5 , **characterised by** being the adhesive a polyurethane resin.

7. Method for adhesion of reinforcing meshes or rigid sheets to the back of ceramic tiles, natural stone and mosaic composition used in building sector, according to claims 1 to 5, **characterised by** being the adhesive a Epoxy resin.

8. Method for adhesion of reinforcing meshes or rigid sheets to the back of ceramic tiles, natural stone and mosaic composition used in building sector, according to claims 1 to 5, **characterised by** being the adhesive a water-based resin.

9. Method for adhesion of reinforcing meshes or rigid sheets to the back of ceramic tiles, natural stone and mosaic composition used in building sector, according to claims 1 to 5, **characterised by** being the adhesive a Polyester resin.

10. Method for adhesion of reinforcing meshes or rigid sheets to the back of ceramic tiles, natural stone and mosaic composition used in building sector, according to claims 1 to 5 **characterised by** being the adhesive a hybrid or mixture of different types of resins.

11. Method for adhesion of reinforcing meshes or rigid sheets to the back of ceramic tiles, natural stone and mosaic composition used in building sector, according to claims 6 to 9 **characterised in that** termoset resins are included .

## Patentansprüche

1. Methode zum Kleben von Armierungsgeweben oder starren Platten an die Rückseite von Keramikfliesen, Naturstein und Mosaikfliesen, die im Baugewerbe verwendet werden, **dadurch gekennzeichnet, dass** ein mit Photoinitiatoren formulierter UV-Kleber verwendet wird, der an den Fliesen und den Armierungsgeweben aufgetragen wird, welche durch einen Tunnel mit Schwachstrom-/Hochleistungs-UV-Lampen mit vorausberechneten Wellenlängen und Photoinitiatoren geleitet werden, um den Kleber auszuhärten und zu trocknen.

2. Methode zum Kleben von Armierungsgeweben oder starren Platten an die Rückseite von Keramikfliesen, Naturstein und Mosaikfliesen, die im Baugewerbe verwendet werden nach Anspruch 1, **dadurch gekennzeichnet, dass** Fliesen an belüfteten Fassaden angebracht werden.

3. Methode zum Kleben von Armierungsgeweben oder starren Platten an die Rückseite von Keramikfliesen, Naturstein und Mosaikfliesen, die im Baugewerbe verwendet werden nach Anspruch 1 und 2, **dadurch gekennzeichnet, dass** der Kleber am Armierungsgewebe oder an der -platte durch einen Applikationskopf aufgetragen wird.

4. Methode zum Kleben von Armierungsgeweben oder starren Platten an die Rückseite von Keramikfliesen, Naturstein und Mosaikfliesen, die im Baugewerbe verwendet werden nach Anspruch 1 und 2, **dadurch gekennzeichnet, dass** der Kleber am Armierungsgewebe oder an der -platte mittels Sprühpistole aufgetragen wird.

5. Methode zum Kleben von Armierungsgeweben oder starren Platten an die Rückseite von Keramikfliesen, Naturstein und Mosaikfliesen, die im Baugewerbe verwendet werden nach Anspruch 1 und 2, **dadurch gekennzeichnet, dass** der Kleber am Armierungsgewebe oder an der -platte nach Art eines Vorhangs aufgetragen wird.

6. Methode zum Kleben von Armierungsgeweben oder starren Platten an die Rückseite von Keramikfliesen, Naturstein und Mosaiktliesen, die im Baugewerbe verwendet werden nach Ansprüchen 1 bis 5, **dadurch gekennzeichnet, dass** es sich bei dem Kleber um ein Polyurethanharz handelt.

7. Methode zum Kleben von Armierungsgeweben oder starren Platten an die Rückseite von Keramikfliesen, Naturstein und Mosaikfliesen, die im Baugewerbe verwendet werden nach Ansprüchen 1 bis 5, **dadurch gekennzeichnet, dass** es sich bei dem Kleber um ein Epoxydharz handelt.

8. Methode zum Kleben von Armierungsgeweben oder starren Platten an die Rückseite von Keramikfliesen, Naturstein und Mosaikfliesen, die im Baugewerbe verwendet werden nach Ansprüchen 1 bis 5, **dadurch gekennzeichnet, dass** es sich bei dem Kleber um ein Harz auf Wasserbasis handelt.

9. Methode zum Kleben von Armierungsgeweben oder starren Platten an die Rückseite von Keramiktliesen, Naturstein und Mosaikfliesen, die im Baugewerbe verwendet werden nach Ansprüchen 1 bis 5, **dadurch gekennzeichnet, dass** es sich bei dem Kleber um ein Polyesterharz handelt.

10. Methode zum Kleben von Armierungsgeweben oder starren Platten an die Rückseite von Keramikfliesen, Naturstein und Mosaikfliesen, die im Baugewerbe verwendet werden nach Ansprüchen 1 bis 5, **dadurch gekennzeichnet, dass** es sich bei dem Kleber um ein Hybrid oder Gemisch aus verschiedenen Harzsorten handelt.

11. Methode zum Kleben von Armierungsgeweben oder starren Platten an die Rückseite von Keramikfliesen, Naturstein und Mosaikfliesen, die im Baugewerbe verwendet werden nach Ansprüchen 6 bis 9, **dadurch gekennzeichnet, dass** Thermosetharze enthalten sind.

## Revendications

1. Méthode d'adhésion des treillages support de couche de pose ou feuilles rigides au dos des carreaux céramique, de la pierre naturelle et des compositions mosaïques utilisée dans le secteur de la construction, **se caractérisant par** l'utilisation d'un adhésif ultraviolet muni de photoinitiateurs appliqué sur les carreaux et les maillages de renfort placés le long d'un tunnel de lampes ultraviolettes à basse / haute puissance à la longueur d'ondes prédéterminée, et de photoinitiateurs afin de durcir et de sécher l'adhésif.

2. Méthode d'adhésion des treillages support de couche de pose ou feuilles rigides au dos des carreaux céramique, de la pierre naturelle et des compositions mosaïques utilisée dans le secteur de la construction, comme indiqué au point 1, **caractérisée par** le positionnement des carreaux sur les façades ventilées.

3. Méthode d'adhésion des treillages support de couche de pose ou feuilles rigides au dos des carreaux céramique, de la pierre naturelle et des compositions mosaïques utilisée dans le secteur de la construction, comme indiqué aux points 1 et 2, **caractérisée par** l'application de l'adhésif sur la feuille ou le treillage support de couche de pose au moyen d'une tête d'application.

4. Méthode d'adhésion des treillages support de couche de pose ou feuilles rigides au dos des carreaux céramique, de la pierre naturelle et des compositions mosaïques utilisée dans le secteur de la construction, comme indiqué aux points 1 et 2, **caractérisée par** l'application de l'adhésif sur la feuille ou le treillage support de couche de pose au moyen d'un pistolet pulvérisant.

5. Méthode d'adhésion des treillages support de couche de pose ou feuilles rigides au dos des carreaux céramique, de la pierre naturelle et des compositions mosaïques utilisée dans le secteur de la construction, comme indiqué aux points 1 et 2, **caractérisée par** l'application de l'adhésif sur la feuille ou le treillage support de couche de pose sous forme d'écran.

6. Méthode d'adhésion des treillages support de couche de pose ou feuilles rigides au dos des carreaux céramique, de la pierre naturelle et des compositions mosaïques utilisée dans le secteur de la construction, comme indiqué aux points 1 à 5, **caractérisée par** l'adhésif : une résine polyuréthane.

7. Méthode d'adhésion des treillages support de couche de pose ou feuilles rigides au dos des carreaux céramique, de la pierre naturelle et des compositions mosaïques utilisée dans le secteur de la construction, comme indiqué aux points 1 à 5, **caractérisée par** l'adhésif : une résine époxyde.

8. Méthode d'adhésion des treillages support de couche de pose ou feuilles rigides au dos des carreaux céramique, de la pierre naturelle et des compositions mosaïques utilisée dans le secteur de la construction, comme indiqué aux points 1 à 5, **caractérisée par** l'adhésif : une résine à base d'eau.

9. Méthode d'adhésion des treillages support de couche de pose ou feuilles rigides au dos des carreaux céramique, de la pierre naturelle et des compositions mosaïques utilisée dans le secteur de la construction, comme indiqué aux points 1 à 5, **caractérisée par** l'adhésif : une résine polyester.

10. Méthode d'adhésion des treillages support de couche de pose ou feuilles rigides au dos des carreaux céramique, de la pierre naturelle et des compositions mosaïques utilisée dans le secteur de la construction, comme indiqué aux points 1 à 5, **caractérisée par** l'adhésif : une résine hybride ou un mélange de différents types de résines.

11. Méthode d'adhésion des treillages support de couche de pose ou feuilles rigides au dos des carreaux céramique, de la pierre naturelle et des compositions mosaïques utilisée dans le secteur de la construction, comme indiqué aux points 6 à 9, **caractérisée par** la présence de résines thermoset.
